# EUROPEAN PATENT SPECIFICATION

(11) **EP 2 829 807 B1**
(45) Date of publication and mention of the grant of the patent: **03.05.2017**
(21) Application number: 13765110.5
(22) Date of filing: 21.03.2013
(51) Int. Cl.: F24C 7/02, G05B 9/03, H05B 1/02, F24C 7/08, H05B 6/66

(54) **HEAT-ASSISTED COOKING APPARATUS**
WÄRMEUNTERSTÜTZTE KOCHVORRICHTUNG
APPAREIL DE CUISSON À ASSISTANCE THERMIQUE

(30) Priority: 22.03.2012 JP 2012064990
(43) Date of publication of application: 28.01.2015
(73) Proprietor: Panasonic Corporation, Kadoma-shi, Osaka 571-8501 (JP)
(72) Inventor: NAKASHITA, Kiyoshi, Osaka 540-6207 (JP)
(74) Representative: Schwabe - Sandmair - Marx
(86) International application number: PCT/JP2013/001917
(87) International publication number: WO 2013/140804

(56) References cited:
- EP-A1- 2 055 340
- DE-U1-202009 003 889
- GB-A- 2 323 224
- GB-A- 2 434 229
- JP-A- H06 149 604
- JP-A- H10 172 753
- JP-A- 2002 075 615
- JP-A- 2006 286 286
- JP-A- 2007 035 390
- JP-A- 2009 187 338
- JP-B2- S6 210 448
- JP-U- S6 039 102
- US-A1- 2009 241 014

## Description

### TECHNICAL FIELD

The present disclosure relates to a heating cooking apparatus including a heating apparatus such as an oven and a microwave.

### BACKGROUND

In a heating cooking apparatus including a heating apparatus such as an oven and a microwave, it is necessary to prevent from malfunction (unintended heat generation) of the heating apparatus due to failure (for example, a short circuit of a switch) or noise, etc. As prior arts for the purpose of this, for example, there are inventions of PATENT LITERATURES 1, 2 and 3.

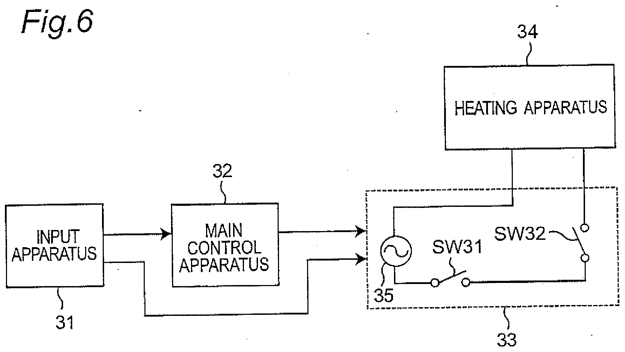

Fig. 6 is a block diagram showing configurations of an illustrative heating cooking apparatus according to a prior art. The heating cooking apparatus of Fig. 6 is configured to include an input apparatus 31, a main control circuit 32, a power control circuit 33, and a heating apparatus 34. The input apparatus 31 is configured to include a switch group (for example, a start key for instructing start of a cooking) for instructing the start and end of the cooking and a kind of cooking, etc. by a user. The state of the switch group is transmitted via a predetermined number of signal lines to the main control circuit 32. However, the ON/OFF of the start key of the switch group is transmitted to the main control circuit 32, while the ON/ OFF of the start key of the switch group is transmitted via the other signal line to the power control circuit 33. For example, the main control circuit 32 includes a microcomputer, and controls the power control circuit 33 based on a signal transmitted from the input apparatus 31. The power control circuit 33 includes a power supply 35 and switches SW31 and SW32, and the power control circuit 33 supplies the heating apparatus 34 with an electric power under the control of the input apparatus 31 and the main control circuit 32. The heating apparatus 34 is a heater of the oven or a high frequency source of the microwave, etc.

In the heating cooking apparatus of Fig. 6, when the user pushes on the start key of the input apparatus 31, the input apparatus 31 goes on transmitting a start signal to the main control circuit 32 and the power control circuit 33 while the start key is pushed on. When the start signal is transmitted from the input apparatus 31, the main control circuit 32 starts transmission of an active signal to the power control circuit 33. The main control circuit 32 goes on transmitting the active signal to the power control circuit 33 until the user instructs stop of the cooking. When both of the start signal from the input apparatus 31 and the active signal from the main control circuit 32 are simultaneously inputted, the power control circuit 33 turns on the switch SW31 (for example, a latch circuit). Even if the finger of the user is moved away from the start key and the start signal is not transmitted from the input apparatus 31 to the power control circuit 33, the switch SW31 goes on being turned on while the active signal from the main control circuit 32 is inputted to the power control circuit 33. Then, when the user instructs a cooking using the input apparatus 31, the main control circuit 32 controls the power control circuit 33 according to the kind of cooking. At that time, only when the switch SW31 is turned on, the power control circuit 33 turns on the switch SW32 (for example, a relay) according to the kind of cooking. In this way, both of the switches SW31 and SW32 are turned on, and therefore, the heating apparatus 34 can be supplied with the electric power.

According to the heating cooking apparatus of Fig. 6, even if the main control circuit 32 erroneously judges that the start key is pushed on due to failure or noise, etc., the switch SW31 is still turned off. Accordingly, the heating apparatus 34 can not be supplied with the electric power, and therefore, it is possible to prevent from malfunction of the heating apparatus 34.

### CITATION LIST

### PATENT LITERATURE

PATENT LITERATURE 1: Japanese Patent Laid-open Publication No. JPS60-264088 A
PATENT LITERATURE 2: Japanese Patent Laid-open Publication No. JPS63-189715 A
PATENT LITERATURE 3: GB 2 323 224 A

### SUMMARY OF THE INVENTION

### TECHNICAL PROBLEM

However, in the heating cooking apparatus of Fig. 6, in case that the input apparatus 31 is a touch panel, there is no start key. Accordingly, the signal lines can be connected to the touch panel, and therefore, the start signal can not be transmitted to the main control circuit 32 and the power control circuit 33. Accordingly, it is impossible to use the touch panel as the input apparatus 31 of the heating cooking apparatus of Fig. 6.

An object of the present disclosure is to solve the above-described problems, and to provide a heating cooking apparatus, which is capable of using various user interfaces and which is capable of preventing from malfunction of the heating apparatus.

### SOLUTION TO PROBLEM

According to one aspect of the present disclosure, there is provided a heating cooking apparatus including heating means, power control means configured to supply the heating means with an electric power, input means configured to obtain a user input, main control means configured to control the power control means, and sub-control means configured to control the power control means. The input means, the main control means, and the sub-control means are connected via a communication bus to each other. The input means transmits a start signal for instructing start of a cooking to the main control means and the sub-control means. When the start signal is transmitted from the input means, the main control means transmits a first active signal to the power control means. When the start signal is transmitted from the input means, the sub-control means transmits a second active signal to the power control means. When both of the first active signal and the second active signal are simultaneously inputted, the power control means starts supplying the heating means with the electric power.

### ADVANTAGEOUS EFFECTS OF THE INVENTION

According to the heating cooking apparatus of the present disclosure, it is possible to use various user interfaces and to prevent from malfunction of the heating apparatus.

### BRIEF DESCRIPTION OF DRAWINGS

Fig. 1 is a block diagram showing a configuration of a heating cooking apparatus according to a first embodiment.
Fig. 2 is a flow chart showing a cooking process executed by a main control circuit 4 of Fig. 1.
Fig. 3 is a flow chart showing a cooking process executed by a sub-control circuit 5 of Fig. 1.
Fig. 4 is a flow chart showing a cooking process executed by a power control circuit 6 of Fig. 1.
Fig. 5 is a block diagram showing a configuration of a heating cooking apparatus according to a second embodiment.
Fig. 6 is a block diagram showing a configuration of an illustrative heating cooking apparatus according to a prior art.

### DESCRIPTION OF EMBODIMENTS

Embodiments of the present disclosure will be described below with reference to the drawings. It is noted that the described embodiments are merely illustrative, and are not intended to be limited thereto.

### FIRST EMBODIMENT

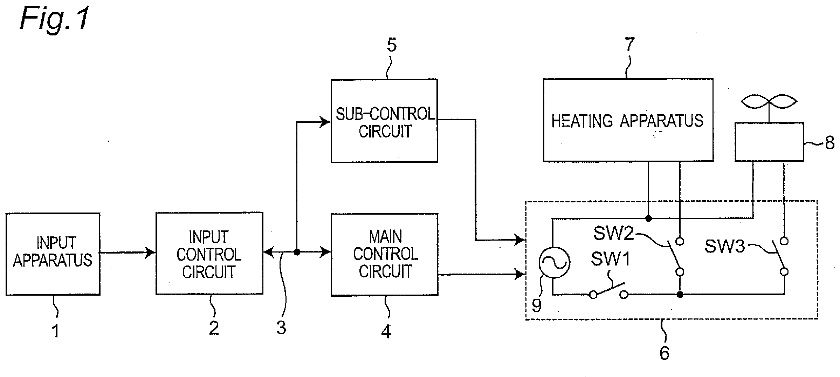

Fig. 1 is a block diagram showing a configuration of a heating cooking apparatus according to a first embodiment. The heating cooking apparatus of Fig. 1 is configured to include an input apparatus 1, an input control circuit 2, a communication bus 3, a main control circuit 4, a sub-control circuit 5, a power control circuit 6, a heating apparatus 7, and a fan 8. The input apparatus 1 is a user interface for instructing start and end of a cooking, and a kind of cooking, etc. by a user. The input apparatus 1 may be a group of switches, or may be a touch panel. For example, the input control circuit 2 includes a microcomputer, the input control circuit 1 generates a signal (a start signal and a cooking instruction signal as described below), which is transmitted to the main control circuit 4 and the sub-control circuit 5, based on a user input obtained by the input apparatus 1. Both of the input apparatus 1 and the input control circuit 2 function as input means for obtaining the user input. The input control circuit 2, the main control circuit 4, and the sub-control circuit 5 are connected via the communication bus 3 to each other. The main control circuit 4 includes, for example, the microcomputer, and controls the power control circuit 6 based on a signal transmitted via the communication bus 3 from the input control circuit 2. The sub-control circuit 5 includes, for example, a watchdog IC, and controls the power control circuit 6 based on the signal transmitted via the communication bus 3 from the input control circuit 2. The power control circuit 6 includes a power supply 9 and switches SW1 to SW3, and supplies the heating apparatus 7 and the fan 8 with the electric power under the control of the main control circuit 4 and the sub-control circuit 5. The heating apparatus 7 is a heater of an oven or a high frequency source of a microwave, etc. The fan 8 is provided for performing, for example, a convection cooking.

The heating cooking apparatus of Fig. 1 further includes a heating chamber for accommodating objects to be heated and doors of the heating chamber, etc. However, they are omitted from Fig. 1 for the purpose of simplification of the drawing.

The heating cooking apparatus of Fig. 1 operates as follows.

First of all, the user sets the kind of cooking, etc. using the input apparatus 1, and pushes on a start key (for example, a start key displayed on the touch panel) of the input apparatus 1. In response to pushing on the start key, the input control circuit 2 transmits the start signal for instructing the start of the cooking via the communication bus 3 to the main control circuit 4 and the sub-control circuit 5. When the start signal is transmitted from the input control circuit 2, the main control circuit 4 starts a transmission of a first active signal toward the power control circuit 6. The first active signal is a continuous rectangular wave of, for example, 4 kHz, etc. The main control circuit 4 goes on transmitting the first active signal to the power control circuit 6 until the user instructs the stop of the cooking. When the start signal is transmitted from the input control circuit 2, the sub-control circuit 5 transmits a second active signal to the power control circuit 6. The second active signal is a signal, for example, which is ON only over a predetermined time interval (such as 500 ms) (for example, the signal becomes a high level for the interval, and the signal becomes a low level for the other interval). When both of the first active signal (rectangular wave) and the second active signal (an interval of the high level) are simultaneously inputted, the power control circuit 6 turns on the switch SW1 (for example, a latch circuit), and this leads to such a state that the heating apparatus 7 can be supplied with the electric power. When only the first active signal is inputted, or when the signal of the high level or the low level is inputted from the main control circuit 4, the power control circuit 6 does not turn on the switch SW1. When the main control circuit 4 is uncontrolled, there are many cases where the main control circuit 4 may generate the signal of the high level or the low level. However, the heating cooking apparatus of Fig. 1 prevents from turning on the switch SW1 in such a case. Although the second active signal becomes the low level after passing of the interval of the high level, the switch SW1 goes on being turned on as long as the first active signal does not be stopped.

Next, the input control circuit 2 generates a cooking instruction signal for instructing the kind of cooking (for example, the convection cooking) such as a heating method, a heating time, and a heating strength, for example, according to a preset cooking program. The input control circuit 2 transmits the cooking instruction signal via the communication bus 3 to the main control circuit 4. The main control circuit 4 transmits a control signal for supplying the heating apparatus 7 and the fan 8 with the electric power to the power control circuit 6, according to the contents of the cooking instruction signal. Only when the switch SW1 is turned on, the power control circuit 6 turns on the switches SW2 and SW3 (for example, a relay) according to the contents of the control signal. When the switch SW2 is turned on, the heating apparatus 7 is supplied with the electric power. When the switch SW3 is turned on, the fan 8 is supplied with the electric power.

When the cooking is terminated, the input control circuit 2 transmits a cooking instruction signal for indicating that the cooking has been terminated, via the communication bus 3 to the main control circuit 4. According to this, the main control circuit 4 transmits a control signal to the power control circuit 6, where the control signal is provided for stopping supplying the heating apparatus 7 and the fan 8 with the electric power, and the power control circuit 6 turns off the switches SW2 and SW3. Then, the main control circuit 4 stops transmission of the first active signal, and this leads to that the switch SW1 of the power control circuit 6 is turned off.

When the switch SW1 is turned off, the main control circuit 4 does not transmit the control signal to the power control circuit 6, where the control signal is provided for supplying the heating apparatus 7 and the fan 8 with the electric power. In this way, the transmission of the control signal can be inhibited. Accordingly, it is possible to certainly prevent from malfunction of the heating apparatus 7.

In addition, the main control circuit 4 regularly (for example, every five seconds) transmits a signal for inquiring a state of the input control circuit 2 to the input control circuit 2 (for example, whether or not the input control circuit 2 is uncontrolled). Accordingly, the main control circuit 4, for example, transmits a signal including temperature information obtained by a thermistor (not shown), which is attached to a position in the proximity of the heating apparatus 7, to the input control circuit 2. If the main control circuit 4 receives no reply of an ACK from the input control circuit 2 over a predetermined period of time (for example, for one minute) in response to the transmitted signal, the main control circuit 4 judges that the input control circuit 4 has been uncontrolled, and resets the heating cooking apparatus. In this way, the main control circuit 4 and sub-control circuit 5, which are connected via the communication bus 3, operate by a multi-master system.

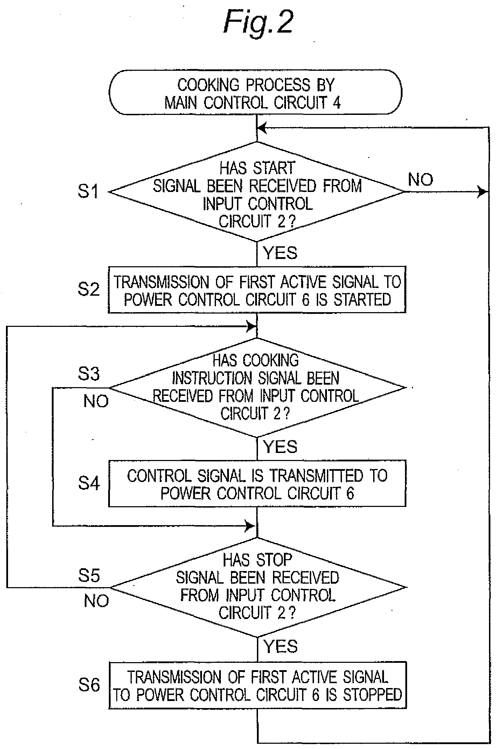

Referring to flow charts of Figs. 2 to 4, an operation of the heating cooking apparatus of Fig. 1 is described as follows.

Fig. 2 is a flow chart showing a cooking process performed by the main control circuit 4 of Fig. 1. In step S1, the main control circuit 4 judges whether or not the start signal has been received from the input control circuit 2. If it is YES, the control flow proceeds to step S2. If it is NO, the process of step S1 is again executed. In step S2, the main control circuit 4 starts the transmission of the first active signal to the power control circuit 6. In step S3, the main control circuit 4 judges whether or not the cooking instruction signal has been received from the input control circuit 2. If it is YES, the process proceeds to step S4. If it is NO, the control flow proceeds to step S5. In step S4, the main control circuit 4 transmits the control signal corresponding to the contents of the cooking instruction signal, to the power control circuit 6. In step S5, the main control circuit 4 judges whether or not the stop signal (that is, the cooking instruction signal for indicating completion of the cooking) has been received from the input control circuit 2. If it is YES, the control flow proceeds to step S6. If it is NO, the control flow returns to step S3. In step S6, the main control circuit 4 stops the transmission of the first active signal to the power control circuit 6. Thereafter, the main control circuit 4 returns the control flow to step S 1.

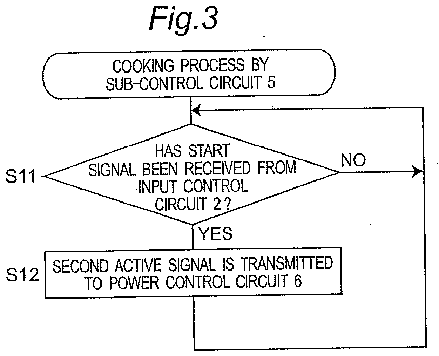

Fig. 3 is a flow chart showing a cooking process executed by the sub-control circuit 5 of Fig. 1. In step S11, the sub-control circuit 5 judges whether or not the start signal has been received from the input control circuit 2. If it is YES, the control flow proceeds to step S12. If it is NO, the process of step S11 is again executed. In step S12, the sub-control circuit 5 transmits the second active signal to the power control circuit 6. Thereafter, the sub-control circuit 5 returns the control flow to step S11.

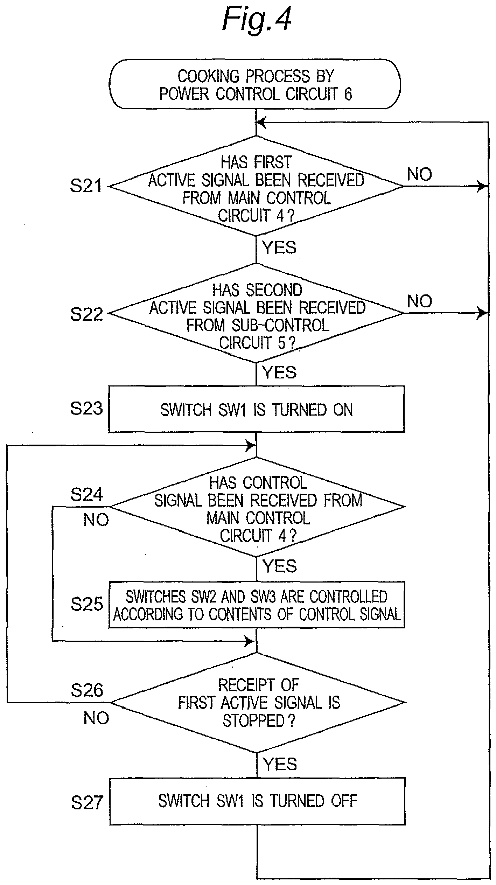

Fig. 4 is a flow chart showing a cooking process executed by the power control circuit 6 of Fig. 1. In step S21, the power control circuit 6 judges whether or not the first active signal has been received from the main control circuit 4. If it is YES, the control flow proceeds to step S22. If it is NO, the process of step S21 is again executed. In step S22, the power control circuit 6 judges whether or not the second active signal has been received from the sub-control circuit 5. If it is YES, the control flow proceeds to step S23. If it is NO, the control flow returns to step S21. If it is YES in both of steps S21 and S22, in step S23, the power control circuit 6 turns on the switch SW1. In step S24, the power control circuit 6 judges whether or not the control signal has been received from the main control circuit 4. If it is YES, the control flow proceeds to step S25. If it is NO, the control flow proceeds to step S26. In step S25, the power control circuit 6 controls the switches SW2 and SW3 according to the contents of the control signal. In step S26, the power control circuit 6 judges whether or not the receipt of the first active signal has been stopped. If it is YES, the control flow proceeds to step S27. If it is NO, the control flow returns to step S24. In step S27, the power control circuit 6 turns off the switch SW1. Thereafter, the power control circuit 6 returns the control flow to step S21.

As described above, according to the heating cooking apparatus of Fig. 1, even if the main control circuit 4 or the sub-control circuit 5 erroneously judges that the start key is pushed on due to failure or noise, etc., the switch SW1 is still turned off. Accordingly, the heating apparatus 7 is not supplied with the electric power, and therefore, it is possible to prevent from malfunction of the heating apparatus 7. According to the heating cooking apparatus of Fig. 1, it is possible to use the various user interfaces including the touch panel as the input apparatus 1, and to prevent from malfunction of the heating apparatus 7.

In case that the input apparatus 1 is the touch panel, or in case that the input apparatus 1 further includes a display apparatus, a state, etc. of the heating apparatus 7 may be displayed on the touch panel or the display apparatus.

The power control circuit 6 includes the plurality of switches SW1 to SW3. However, the present disclosure is not limited thereto. For example, the power control circuit 6 may include only a switch. In this case, when both of the first active signal and the second active signal are inputted simultaneously, the power control circuit 6 immediately starts supplying the heating apparatus 7 with the electric power.

### SECOND EMBODIMENT

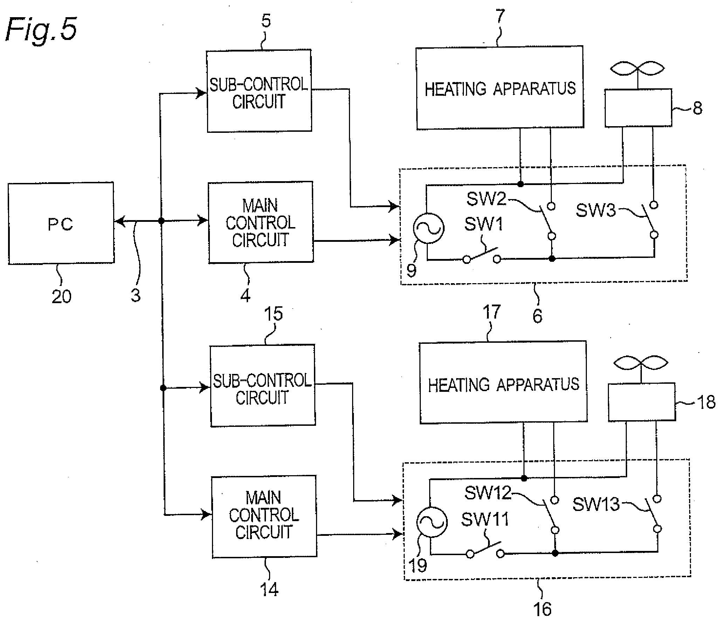

Fig. 5 is a block diagram showing a configuration of a heating cooking apparatus according to a second embodiment. The heating cooking apparatus of Fig. 5 is configured to include a personal computer (PC) 20, the communication bus 3, the main control circuits 4 and 14, the sub-control circuits 5 and 15, the power control circuits 6 and 16, the heating apparatuses 7 and 17, and the fans 8 and 18. The heating cooking apparatus of Fig. 5 is configured to include the PC 20 of a general-purpose computer including an input and output apparatus, instead of the input apparatus 1 and the input control circuit 2. The PC 20 functions as input means for obtaining the user input. The PC 20 generates a signal (the start signal and the cooking instruction signal) for transmitting to the main control circuits 4 and 14 and the sub-control circuits 5 and 15, based on the user input. The PC 20, the main control circuits 4 and 14, and the sub-control circuits 5 and 15 are connected to each other via the communication bus 3. The main control circuits 4 and 14 and the sub-control circuits 5 and 15 have mutually discriminable identifiers, respectively. The main control circuit 4 controls the power control circuit 6 based on a signal transmitted via the communication bus 3 from the PC 20. The sub-control circuit 5 controls the power control circuit 6 based on the signal transmitted via the communication bus 3 from the PC 20. The power control circuit 6 includes the power supply 9 and the switches SW1 to SW3, and supplies the heating apparatus 7 and the fan 8 with the electric power under the control of the main control circuit 4 and the sub-control circuit 5. The main control circuit 14 controls the power control circuit 16 based on the signal transmitted via the communication bus from the PC 20. The sub-control circuit 15 controls the power control circuit 16 based on the signal transmitted via the communication bus from the PC 20. The power control circuit 16 includes a power supply 19 and switches SW11 to SW13, and supplies the heating apparatus 17 and the fan 18 with the electric power under the control of the main control circuit 14 and the sub-control circuit 15.

In this way, the heating cooking apparatus of Fig. 5 is configured to include the plurality of heating apparatuses 7 and 17, the plurality of power control circuits 6 and 16 connected to the plurality of heating apparatuses 7 and 17, respectively, and the plurality of main control circuits 4 and 14 and the plurality of sub-control circuits 5 and 15 connected to the plurality of power control circuits 6 and 16, respectively. In other words, in the heating cooking apparatus of Fig. 5, the PC 20, and the plurality of ovens or microwaves are connected via the communication bus 3 to each other. The first oven or microwave includes the main control circuit 4, the sub-control circuit 5, the power control circuit 6, the heating apparatus 7, and the fan 8, and the second oven or microwave incudes the main control circuit 14, the sub-control circuit 15, the power control circuit 16, the heating apparatus 17, and the fan 18.

The heating cooking apparatus of Fig. 5 further includes a heating chamber for accommodating objects to be heated and a door of the heating chamber, etc. in correspondence to the plurality of ovens or microwaves, respectively. However, they are omitted from Fig. 5 for the purpose of simplification of the drawing.

For example, in case that the cooking is performed by using the heating apparatus 7 and the fan 8, the heating cooking apparatus of Fig. 5 operates as follows.

First of all, the user sets the kind of cooking, etc. by using the PC 20, and instructs the start of the cooking. The PC 20 transmits the start signal including an identifier for specifying one of the main control circuits 4 and 14 and the sub-control circuits 5 and 15 via the communication bus 3 to the main control circuits 4 and 14 and the sub-control circuits 5 and 15. In this example, first of all, the PC 20 transmits the start signal including an identifier of the main control circuits 4 via the communication bus 3 to the main control circuits 4 and 14 and the sub-control circuits 5 and 15. When the start signal including the identifier of the main control circuit 4 is transmitted from the PC 20, the main control circuit 4 starts the transmission of the first active signal (rectangular wave) to the power control circuit 6. On the other hand, even if the start signal including the identifier of the main control circuit 4 is transmitted from the PC 20, the other main control circuit 14 and the sub-control circuits 5 and 15 ignore the start signal including the identifier of the main control circuit 4. Next, the PC 20 transmits the start signal including the identifier of the sub-control circuits 5 via the communication bus 3 to the main control circuits 4 and 14 and the sub-control circuits 5 and 15. When the start signal including the identifier of the sub-control circuits 5 is transmitted from the PC 20, the sub-control circuit 5 starts the transmission of the second active signal (the interval of the high level) toward the power control circuit 6. On the other hand, even if the start signal including the identifier of the sub-control circuit 5 is transmitted from the PC 20, the other main control circuits 4 and 14 and the sub-control circuit 15 ignore the start signal including the identifier of the sub-control circuit 5. When both of the first active signal (rectangular wave) and the second active signal (the interval of the high level) are simultaneously inputted, the power control circuit 6 turns on the switch SW1, and this leads to such a state that the heating apparatus 7 can be supplied with the electric power.

Next, the PC 20 generates the cooking instruction signal instructing the kind of cooking (for example, the convection cooking) such as the heating method, the heating time, and the heating strength, for example, according to the preset cooking program. The PC 20 transmits the cooking instruction signal including the identifier of the main control circuit 4 via the communication bus 3 to the main control circuit 4. The main control circuit 4 transmits the control signal to the power control circuit 6 according to the contents of the cooking instruction signal, where the control signal is provided for supplying the heating apparatus 7 and the fan 8 with the electric power. As long as the switch SW1 is turned on, the power control circuit 6 turns on the switches SW2 and SW3 according to the contents of the control signal.

When the cooking is terminated, the PC 20 transmits the cooking instruction signal including the identifier of the main control circuit 4 via the communication bus 3 to the main control circuit 4 where the cooking instruction signal indicates that the cooking has been terminated. According to this, the main control circuit 4 transmits the control signal to the power control circuit 6, where the control signal is provided for stopping that the heating apparatus 7 and the fan 8 are supplied with the electric power, and the power control circuit 6 turns off the switches SW2 and SW3. Then, the main control circuit 4 stops the first active signal, and therefore, the switch SW1 of the power control circuit 6 is turned off.

In this way, when the start signal including the identifier for specifying the main control circuit is transmitted from the PC 20, each of the main control circuits 4 and 14 transmits the first active signal to the power control circuit connected to the main control circuit. In addition, when the start signal including the identifier for specifying the sub-control circuit is transmitted from the PC 20, each of the sub-control circuits 5 and 15 transmits the second active signal to the power control circuit connected to the sub-control circuit. In case that the plurality of ovens or microwaves are connected via the communication bus 3 to the PC 20, the start signal including the identifier is used, and therefore, the ovens or the microwaves, which are not used for the cooking, are not supplied with the electric power.

In addition, the PC 20 transmits a signal for demanding created date and time information of their software to each of the main control circuits 4 and 14 and the sub-control circuits 5 and 15. According to this, each of the main control circuits 4 and 14 and the sub-control circuits 5 and 15 returns a signal including the demanded information to the PC 20. Accordingly, it is possible to facilitate version management of the software.

In addition, the PC 20 transmits a signal for demanding error information to each of the main control circuits 4 and 14. According to this, each of the main control circuits 4 and 14 transmits the error information to date to the PC 20. Accordingly, it is possible to immediately know a failure cause of the oven or the microwave related to each of the main control circuits 4 and 14.

In this way, the PC 20, the main control circuits 4 and 14, and the sub-control circuits 5 and 15, which are connected via the communication bus 3, operate by the multi-master system.

In addition, in the heating cooking apparatus of Fig. 5, the communication bus 3 is connected to a plurality of PCs, and the plurality of ovens or microwaves may be controlled by the multi-master system.

In general, in conventional heating cooking apparatuses, there is a case where a plurality of heating apparatuses such as the heater of the oven, the high frequency source of the microwave, etc. are included in a single enclosure. The heating cooking apparatus of Fig. 5 is applicable not only for the plurality of ovens or microwaves, which are independent from each other, but also for a single heating cooking apparatus including the plurality of heating apparatuses.

In the heating cooking apparatus of Fig. 1, a PC may be included instead of the input apparatus 1 and the input control circuit 2. In addition, in the heating cooking apparatus of Fig. 5, instead of the PC 20, the input apparatus (a group of switches or a touch panel) and the input control apparatus similar to those of Fig. 1.

As described above, the heating cooking apparatus according to one aspect of the present disclosure includes the following configuration.

According to the heating cooking apparatus of the first aspect, there is provided the heating cooking apparatus including heating means, power control means configured to supply the heating means with an electric power, input means configured to obtain a user input, main control means configured to control the power control means, and sub-control means configured to control the power control means. The input means, the main control means, and the sub-control means are connected via a communication bus to each other, the input means transmits a start signal instructing start of a cooking to the main control means and the sub-control means. When the start signal is transmitted from the input means, the main control means transmits a first active signal to the power control means. When the start signal is transmitted from the input means, the sub-control means transmits a second active signal to the power control means. When both of the first active signal and the second active signal are simultaneously inputted, the power control means starts supplying the heating means with the electric power.

According to the heating cooking apparatus of the second aspect, in the heating cooking apparatus according to the first aspect, there is provided the heating cooking apparatus including a plurality of heating means, a plurality of power control means connected to the plurality of heating means, respectively, a plurality of main control means connected to the plurality of power control means, respectively, a plurality of sub-control means connected to the plurality of power control means, respectively. The input means, the plurality of main control means, and the plurality of sub-control means are connected via the communication bus to each other, and the plurality of main control means and the plurality of sub-control means have mutually discriminable identifiers, respectively. The input means transmits a signal including an identifier for specifying one of the plurality of main control means and the plurality of sub-control means via the communication bus to the plurality of main control means and the plurality of sub-control means. When the start signal including an identifier for specifying the main control means is transmitted from the input means, each of the plurality of main control means transmits the first active signal to the power control means connected to the main control means. When the start signal including an identifier for specifying the sub-control means is transmitted from the input means, each of the plurality of sub-control means transmits the second active signal to the power control means connected to the sub-control means.

According to the heating cooking apparatus of the third aspect, in the heating cooking apparatus according to the first or second aspect, the input means includes a touch panel.

According to the heating cooking apparatus of the fourth aspect, in the heating cooking apparatus according to the first or second aspect, the input means is a general-purpose computer including an input and output apparatus.

According to the heating cooking apparatus of the fifth aspect, in the heating cooking apparatus according to any one of the first to fourth aspects, the input means, the main control means, and the sub-control means operate by a multi-master system.

According to the heating cooking apparatus of one aspect of the present disclosure, even if the main control circuit or the sub-control circuit erroneously judges that the start key is pushed on due to failure or noise, etc., the power control means does not supply the heating means with the electric power, and therefore, it is possible to prevent from malfunction of the heating means. According to this heating cooking apparatus, the heating cooking apparatus is available for various user interfaces including the touch panel as the input means and is capable of preventing from malfunction of the heating means.

In addition, according to the heating cooking apparatus of one aspect of the present disclosure, in case that the heating cooking apparatus includes the plurality of ovens or microwaves, the start signal including the identifier is used. Therefore, the oven or the microwave, which is used for the cooking, is not supplied with the electric power.

### INDUSTRIAL APPLICABILITY

The heating cooking apparatus according to one aspect of the present disclosure is applicable for the heating cooking apparatuses as well as for the other home appliances including the heating apparatuses.

### REFERENCE SIGNS LIST

- 1: Input apparatus,
- 2: Input control circuit,
- 3: Communication bus,
- 4 and 14: Main control circuit,
- 5 and 15: Sub-control circuit,
- 6 and 16: Power control circuit,
- 7 and 17: Heating apparatus,
- 8 and 18: Fan,
- 9 and 19: Power supply,
- 20: Personal computer (PC), and
- SW1 to SW3, and SW11 to SW 13: Switch.

## Claims

1. A heating cooking apparatus comprising heating means (7), power control means (6) configured to supply the heating means (7) with an electric power, input means (1, 2) configured to obtain a user input, main control means (4) configured to control the power control means (6), and
sub-control means (5) configured to control the power control means (6),
the input means (1, 2), the main control means (4), and the sub-control means (5) are connected via one communication bus (3) to each other,
**characterized in that** the input means (1, 2) transmits a start signal instructing start of a cooking to the main control means (4) and the sub-control means (5), wherein, when the start signal is transmitted from the input means (1, 2), the main control means (4) transmits a first active signal of a continuous rectangular wave to the power control means (6),
wherein, when the start signal is transmitted from the input means (1, 2), the sub-control means (5) transmits a second active signal to the power control means (6), and
wherein, when both of the first active signal and the second active signal are simultaneously inputted, the power control means (6) allows the heating cooking apparatus to be in such a state that the heating means (7) can be supplied with the electric power, and continues the state as long as the first active signal does not be stopped.

2. The heating cooking apparatus as claimed in claim 1, wherein the heating cooking apparatus comprises a plurality of heating means (7, 17), a plurality of power control means (6, 16) connected to the plurality of heating means (7, 17), respectively, a plurality of main control means (4, 14) connected to the plurality of power control means (6, 16), respectively, a plurality of sub-control means (5, 15) connected to the plurality of power control means (6, 16), respectively,
wherein the input means (1, 2), the plurality of main control means (4, 14), and the plurality of sub-control means (5, 15) are connected via the communication bus (3) to each other,
wherein the plurality of main control means (4, 14) and the plurality of sub-control means (5, 15) have mutually discriminable identifiers, respectively,
wherein the input means (1, 2) transmits a signal including an identifier for specifying one of the plurality of main control means (4, 14) and the plurality of sub-control means (5, 15) via the one communication bus (3) to the plurality of main control means (4, 14) and the plurality of sub-control means (5, 15),
wherein, when the start signal including an identifier for specifying the main control means (4, 14) is transmitted from the input means (1, 2), each of the plurality of main control means (4, 14) transmits the first active signal to the power control means (6, 16) connected to the main control means (4, 14), and
wherein, when the start signal including an identifier for specifying the sub-control means (5, 15) is transmitted from the input means (1, 2), each of the plurality of sub-control means (5, 15) transmits the second active signal to the power control means (6, 16) connected to the sub-control means (5, 15).

3. The heating cooking apparatus as claimed in claim 1 or 2,
wherein the input means (1, 2) includes a touch panel.

4. The heating cooking apparatus as claimed in claim 1 or 2,
wherein the input means (1, 2) is an universal computer including an input and output apparatus.

5. The heating cooking apparatus as claimed in any one of claims 1 to 4,
wherein the input means (1, 2), the main control means (4, 14), and the sub-control means (5, 15) operate by a multi-master system.

## Patentansprüche

1. Heizkocheinrichtung, die Folgendes umfasst: Heizmittel (7), Leistungssteuerungsmittel (6), das dazu ausgelegt ist, das Heizmittel (7) mit einer elektrischen Leistung zu versorgen, Eingabemittel (1, 2), die dazu ausgelegt sind, eine Benutzereingabe zu erhalten, Hauptsteuerungsmittel (4), das dazu ausgelegt ist, das Leistungssteuerungsmittel (6) zu steuern, und Untersteuerungsmittel (5), das dazu ausgelegt ist, das Leistungssteuerungsmittel (6) zu steuern, wobei die Eingabemittel (1, 2), das Hauptsteuerungsmittel (4) und das Untersteuerungsmittel (5) über einen Kommunikationsbus (3) miteinander verbunden sind,
**dadurch gekennzeichnet, dass** die Eingabemittel (1, 2) ein Startsignal übertragen, das das Hauptsteuerungsmittel (4) und das Untersteuerungsmittel (5) zum Starten eines Kochens anweist,
wobei, wenn das Startsignal von den Eingabemitteln (1, 2) übertragen wird, das Hauptsteuerungsmittel (4) ein erstes aktives Signal einer kontinuierlichen Rechteckwelle zum Leistungssteuerungsmittel (6) überträgt,
wobei, wenn das Startsignal von den Eingabemitteln (1, 2) übertragen wird, das Untersteuerungsmittel (5) ein zweites aktives Signal zum Leistungssteuerungsmittel (6) überträgt, und
wobei, wenn das erste aktive Signal und das zweite aktive Signal gleichzeitig eingegeben werden, das Leistungssteuerungsmittel (6) es der Heizkocheinrichtung erlaubt, in einem Zustand zu sein, in dem das Heizmittel (7) mit der elektrischen Leistung versorgt werden kann, und den Zustand fortsetzt, solange das erste aktive Signal nicht gestoppt wird.

2. Heizkocheinrichtung nach Anspruch 1, wobei die Heizkocheinrichtung Folgendes umfasst: eine Vielzahl von Heizmitteln (7, 17), eine Vielzahl von Leistungssteuerungsmitteln (6, 16), die mit der Vielzahl von Heizmitteln (7, 17) verbunden sind, eine Vielzahl von Hauptsteuerungsmitteln (4, 14), die mit der Vielzahl von Leistungssteuerungsmitteln (6, 16) verbunden sind, eine Vielzahl von Untersteuerungsmitteln (5, 15), die mit der Vielzahl von Leistungssteuerungsmitteln (6, 16) verbunden sind,
wobei das Eingabemittel (1, 2), die Vielzahl von Hauptsteuerungsmitteln (4, 14) und die Vielzahl von Untersteuerungsmitteln (5, 15) über den Kommunikationsbus (3) miteinander verbunden sind,
wobei die Vielzahl von Hauptsteuerungsmitteln (4, 14) und die Vielzahl von Untersteuerungsmitteln (5, 15) gegenseitig diskriminierbare Identifikatoren haben,
wobei die Eingabemittel (1, 2) ein Signal einschließlich eines Identifikators zum Angeben der Vielzahl von Hauptsteuerungsmitteln (4, 14) und/oder der Vielzahl von Untersteuerungsmitteln (5, 15) über den Kommunikationsbus (3) zur Vielzahl von Hauptsteuerungsmittel (4, 14) und zur Vielzahl von Untersteuerungsmitteln (5, 15) übertragen,
wobei, wenn das Startsignal einschließlich eines Identifikators zum Angeben der Hauptsteuerungsmittel (4, 14) von den Eingabemitteln (1, 2) übertragen wird, jedes der Vielzahl von Hauptsteuerungsmitteln (4, 14) das erste aktive Signal zu den Leistungssteuerungsmitteln (6, 16), die mit den Hauptsteuerungsmitteln (4, 14) verbunden sind, überträgt, und
wobei, wenn das Startsignal einschließlich eines Identifikators zum Angeben der Untersteuerungsmittel (5, 15) von den Eingabemitteln (1, 2) übertragen wird, jedes der Vielzahl von Untersteuerungsmitteln (5, 15) das zweite aktive Signal zu den Leistungssteuerungsmitteln (6, 16), die mit den Untersteuerungsmitteln (5, 15) verbunden sind, überträgt.

3. Heizkocheinrichtung nach Anspruch 1 oder 2, wobei die Eingabemittel (1, 2) ein Touchpanel umfassen.

4. Heizkocheinrichtung nach Anspruch 1 oder 2, wobei die Eingabemittel (1, 2) ein Universalcomputer sind, der eine Eingabe- und eine Ausgabeeinrichtung umfasst.

5. Heizkocheinrichtung nach einem der Ansprüche 1 bis 4, wobei die Eingabemittel (1,2), die Hauptsteuerungsmittel (4, 14) und die Untersteuerungsmittel (5, 15) von einem Multimastersystem betrieben werden.

## Revendications

1. Appareil de cuisson à chauffage comprenant un moyen de chauffage (7), un moyen de commande d'énergie (6) conçu pour alimenter le moyen de chauffage (7) en énergie électrique, des moyens d'entrée (1, 2) conçus pour saisir une entrée utilisateur, un moyen de commande principal (4) conçu pour commander le moyen de commande d'énergie (6), et un moyen de commande secondaire (5) conçu pour commander le moyen de commande d'énergie (6),
les moyens d'entrée (1, 2), le moyen de commande principal (4) et le moyen de commande secondaire (5) étant connectés les uns aux autres par le biais d'un bus de communication (3),
**caractérisé en ce que** les moyens d'entrée (1, 2) transmettent un signal de démarrage donnant la consigne de démarrage d'une cuisson au moyen de commande principal (4) et au moyen de commande secondaire (5),
dans lequel, lorsque le signal de démarrage est transmis par les moyens d'entrée (1, 2), le moyen de commande principal (4) transmet un premier signal actif d'onde rectangulaire continue au moyen de commande d'énergie (6),
dans lequel, lorsque le signal de démarrage est transmis par les moyens d'entrée (1, 2), le moyen de commande secondaire (5) transmet un deuxième signal actif au moyen de commande d'énergie (6), et
dans lequel, lorsque le premier signal actif ainsi que le deuxième signal actif sont émis simultanément, le moyen de commande d'énergie (6) permet à l'appareil de cuisson à chauffage d'être dans un état tel que le moyen de chauffage (7) peut être alimenté en énergie électrique, et maintient cet état tant que le premier signal actif n'a pas été arrêté.

2. Appareil de cuisson à chauffage selon la revendication 1, comprenant une pluralité de moyens de chauffage (7, 17), une pluralité de moyens de commande d'énergie (6, 16) connectés, respectivement, à la pluralité de moyens de chauffage (7, 17), une pluralité de moyens de commande principaux (4, 14) connectés, respectivement, à la pluralité de moyens de commande d'énergie (6, 16), une pluralité de moyens de commande secondaires (5, 15) connectés, respectivement, à la pluralité de moyens de commande d'énergie (6, 16),
dans lequel les moyens d'entrée (1, 2), la pluralité de moyens de commande principaux (4, 14) et la pluralité de moyens de commande secondaires (5, 15) sont connectés les uns aux autres par le biais du bus de communication (3),
dans lequel la pluralité de moyens de commande principaux (4, 14) et la pluralité de moyens de commande secondaires (5, 15) ont respectivement des identifiants mutuellement différentiables,
dans lequel les moyens d'entrée (1, 2) transmettent un signal comprenant un identifiant destiné à indiquer une pluralité de moyens de commande, parmi la pluralité de moyens de commande principaux (4, 14) et la pluralité de moyens de commande secondaires (5, 15) par le biais dudit bus de communication (3), à la pluralité de moyens de commande principaux (4, 14) et la pluralité de moyens de commande secondaires (5, 15),
dans lequel, lorsque le signal de démarrage comprenant un identifiant destiné à indiquer les moyens de commande principaux (4, 14) est transmis par les moyens d'entrée (1, 2), chacun des moyens de la pluralité de moyens de commande principaux (4, 14) transmet le premier signal actif aux moyens de commande d'énergie (6, 16) connectés aux moyens de commande principaux (4, 14), et
dans lequel, lorsque le signal de démarrage comprenant un identifiant destiné à indiquer les moyens de commande secondaires (5, 15) est transmis par les moyens d'entrée (1, 2), chacun des moyens de la pluralité de moyens de commande secondaires (5, 15) transmet le deuxième signal actif aux moyens de commande d'énergie (6, 16) connectés aux moyens de commande secondaires (5, 15).

3. Appareil de cuisson à chauffage selon la revendication 1 ou 2,
dans lequel les moyens d'entrée (1, 2) comprennent un écran tactile.

4. Appareil de cuisson à chauffage selon la revendication 1 ou 2,
dans lequel les moyens d'entrée (1, 2) sont constitués par un ordinateur universel comprenant un appareil d'entrée et de sortie.

5. Appareil de cuisson à chauffage selon l'une quelconque des revendications 1 à 4,
dans lequel les moyens d'entrée (1, 2), les moyens de commande principaux (4, 14) et les moyens de commande secondaires (5, 15) fonctionnent avec un système multi-maître.
